(19)

Europäisches
Patentamt
European
Patent Office
Office européen
des brevets

(11) **EP 2 164 183 A1**

(12) **EUROPEAN PATENT APPLICATION**
published in accordance with Art. 153(4) EPC

(43) Date of publication:
**17.03.2010 Bulletin 2010/11**

(51) Int Cl.:
*H04B 3/23* (2006.01)        *H04M 1/60* (2006.01)
*H04R 3/02* (2006.01)

(21) Application number: **08765499.2**

(22) Date of filing: **05.06.2008**

(86) International application number:
**PCT/JP2008/060728**

(87) International publication number:
**WO 2008/150022 (11.12.2008 Gazette 2008/50)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.06.2007 JP 2007152541**

(71) Applicant: **Sony Corporation
Tokyo 108-0075 (JP)**

(72) Inventors:
• **MATSUI, Takeshi
Tokyo 108-0075 (JP)**

• **KATO, Yasuhiko
Tokyo 108-0075 (JP)**
• **KIHARA, Nobuyuki
Tokyo 108-0075 (JP)**
• **KISHI, Hideki
Tokyo 108-0075 (JP)**
• **KODAMA, Yasuhiro
Tokyo 108-0075 (JP)**
• **SAKURABA, Yohei
Tokyo 108-0075 (JP)**

(74) Representative: **Horner, David Richard et al
D Young & Co
120 Holborn
London EC1N 2DY (GB)**

(54) **SOUND SIGNAL PROCESSOR AND DELAY TIME SETTING METHOD**

(57) An echo canceller formed of an adaptive filter is designed such that even under a condition where a system transmission delay is undefined, an appropriate delay time can be set in a delay circuit that absorbs a system delay, and that an effective echo cancellation effect can always be achieved. A time difference of a transmission path until a reproduction audio signal input to the delay circuit is input as a processing target signal of an adaptive filter system through a space between a speaker and a microphone is determined, and the delay time corresponding to this time difference is set in the delay circuit. At this time, the speaker and the microphone are placed so that the distance therebetween is small, and the delay time of the delay circuit is set to 0. Thus, the determined time difference indicates a system transmission delay in the above transmission path. That is, an accurate delay time corresponding to the system transmission delay can be set in the delay circuit.

FIG. 5

EP 2 164 183 A1

**Description**

Technical Field

The present invention relates to an audio signal processing apparatus having an audio signal processing function called so-called echo cancellation, and a method for setting a delay time for a signal delay unit provided in the audio signal processing apparatus.

Background Art

An acoustic system configured to provide calls, conversations, and the like between talkers present in distant places or positions in a manner as in an audio transmission/reception processing system in an audio conferencing system, a video conferencing system, and the like, as well as hands-free telephony using telephones, is also called a loudspeaker-based telephony or the like, and has already been put into practical use and widely used.

In the above loudspeaker-based telephony system, for example, communication terminal devices capable of communicating with one another in accordance with a certain communication scheme are placed at a plurality of different places. In addition to this, audio picked up by a microphone on the side of one communication terminal device is transmitted from the one communication terminal device to another communication terminal device, and is emitted as sound from a speaker on the side of the other communication terminal device that has received the audio. This enables talkers present in distant places to have a conversation.

In the loudspeaker-based telephony system, however, audio emitted from a speaker on the side of one communication terminal device, which is output from the side of another communication terminal device, is picked up again by a microphone on the side of the one communication terminal device and is emitted as sound from a speaker on the side of the other communication terminal device. Then, such an operation is repeated so as to circulate (loop). This causes a phenomenon called echo in which, for example, one party can hear his/her own spoken voice like an echo as well as audio spoken of the other party in a mixed manner from a speaker. Additionally, in this regard, an increase in the sound level of the echo causes an infinite repetition of the above loop and causes a phenomenon called howling. In this manner, the loudspeaker-based telephony system involves problems such as reduction in call audio quality due to echoes or howling and difficulty in using a call system.

Accordingly, it is known that a loudspeaker-based telephony system is provided with an audio signal processing system called an echo canceller or the like.

As this echo canceller, that employing an adaptive filter system has been known.

This adaptive filter system, in addition to obtaining the characteristic of an impulse response for transmission sound (echo path) between a speaker and a microphone, uses sound to be emitted from the speaker as an input signal and convolves the above impulse response with this input signal to generate a signal component of pseudo-echo sound as an output. Then, this signal component of the echo sound is picked up by the microphone, and is subtracted from an audio signal to be transmitted to the communication terminal device on the side of the other party. In such a state of convergence of the operation of the adaptive filter system, audio in which echo sound has been canceled is transmitted to the communication terminal device on the side of the other party and therefore, echo sound of the voice spoken by the one party is removed (canceled) from the sound emitted from the speaker.

Incidentally, in a case where a signal processing circuit, a transmission path, or the like is located in at least one of a signal path from an input of an echo canceller to a speaker and a signal path from a microphone to the echo canceller, a transmission delay is caused by the signal processing circuit or transmission path. Depending on this transmission delay, a large time difference may occur between the timing when an input signal is input to the echo canceller and the timing when a signal component of echo sound picked up and obtained by the microphone is input to the echo canceller, and may hinder an appropriate echo cancellation operation from being performed.

Accordingly, Patent Document 1 discloses a configuration in which a delay circuit is inserted in a path along which a receiving call signal that is a sound to be output from a speaker is input to an echo canceller as an input signal so that a delay time corresponding to the above transmission delay is set in this delay circuit. With this configuration, the above time difference is absorbed.

Patent Document 1 Japanese Unexamined Patent Application Publication No. 8-274689

However, according to the content described in Patent Document 1 above, in addition to previous knowledge about a transmission delay time in the signal processing circuit or transmission path located in the signal path from the input of the echo canceller to the speaker or the signal path from the microphone to the echo canceller, a delay time is set in the delay circuit in accordance with this transmission delay time. Then, in the subsequence processing, the delay circuit is designed to operate according to the fixed delay time set in advance in this manner.

That is, in Patent Document 1, a delay time is set on the assumption that the signal processing circuit, transmission path, or the like located in the signal path from the input of the echo canceller to the speaker or the signal path from the microphone to the echo canceller is known. However, this means, in other words, that in such a situation that it is not possible to specify what is to be connected as the above signal processing circuit or the like, the transmission delay is undefined so that it is not possible to set an appropriate delay time in the delay circuit. In this case, a problem occurs in that the achievement of an effective echo cancellation effect cannot be expected.

Disclosure of Invention

Accordingly, the present invention takes the above problems into consideration and provides an audio signal processing apparatus configured as follows:

That is, the audio signal processing apparatus is configured to include signal delay means for, upon receipt of a first signal that has been subjected to a predetermined processing stage in a first processing path for executing predetermined processing involved until an audio signal transmitted from a side of another party of communication is received and is emitted as sound from a speaker, delaying the first signal by a set delay time and outputting the first signal; cancellation processing means for, by obtaining a signal output from the signal delay means as an input signal, executing a process for removing a signal component of the sound emitted from the speaker, which is regarded as having been picked up by a microphone, as a cancellation target, from a second signal that has been subjected to a predetermined processing stage in a second processing path for executing predetermined processing involved until sound picked up by the microphone is sent to the side of the other party of communication; time difference determining means for determining a time difference until the first signal is emitted from the speaker, picked up by the microphone, and appears as a signal component that forms the second signal; and delay time setting means for setting a delay time of the signal delay means on the basis of a time difference acquired by the time difference determining means.

Additionally, a delay time setting method for an audio signal processing apparatus including a signal delay unit that receives a first signal that has been subjected to a predetermined processing stage in a first processing path for executing predetermined processing involved until an audio signal transmitted from a side of another party of communication is received and is emitted as sound from a speaker, delays the first signal by a set delay time, and outputs the first signal, and a cancellation processing unit that, by obtaining a signal output from the signal delay unit as an input signal, executes a process for removing a signal component of the sound emitted from the speaker, which is regarded as having been picked up by a microphone, as a cancellation target, from a second signal that has been subjected to a predetermined processing stage in a second processing path for executing predetermined processing involved until sound picked up by the microphone is sent to the side of the other party of communication is configured to execute, under a state where the speaker and the microphone are placed so that a physical distance of a path along which the sound emitted from the speaker is picked up by the microphone is shortened as much as possible, a time difference determining procedure for determining a time difference until the first signal is emitted from the speaker, picked up by the microphone, and appears as a signal component that forms the second signal; and a delay time setting procedure for setting a delay time of the signal delay unit on the basis of a time difference acquired in the time difference determining procedure.

Each of the above configurations is based on the assumption of an environment where a first processing path for executing predetermined processing involved until an audio signal transmitted from the side of another party of communication is received and is emitted as sound from a speaker, and a second processing path for executing predetermined processing involved until sound picked up by a microphone is sent to the side of the other party of communication are present. That is, a system of the loudspeaker-based telephony is assumed. In addition to this, a process for canceling a signal component of sound that is regarded as having been obtained by the microphone by picking up sound emitted from the speaker from a second signal subjected to a predetermined processing stage in a second processing path is executed. That is, a basic configuration as a so-called echo canceller is employed.

Then, in this echo canceller, a delayed version of the first signal by the signal delay means is received. This delay time of the signal delay means is set, by determining a time difference caused until the first signal is emitted from the speaker, picked up by the microphone, and appears as a signal component that forms a second signal, on the basis of this time difference.

That is, in the claimed invention, a delay time that is set for an input signal of an echo canceller is variably set so as to be adaptive to a time difference of a transfer path until a first signal is emitted from a speaker, picked up by a microphone, and appears as a signal component that forms a second signal. Here, for simplicity of explanation, if it is considered that the minimum value of the spatial distance between the microphone and the speaker in the above transfer path is ideally 0, the above time difference is equivalent to the sum of a transmission delay of the processing path until the first signal is emitted from the speaker and a transmission delay of the processing system path until the sound picked up by the microphone is obtained as a second signal. If so, in the claimed invention, a delay time corresponding to a transmission delay of a signal processing circuit (and transmission circuit) located in the processing path until the first signal is emitted from the speaker and a signal processing circuit (and transmission circuit) located in the processing system path until the sound picked up by the microphone is obtained as a second signal is adaptively set. This means that even if the signal processing circuit located in the processing path until the first signal is emitted from the speaker and the signal processing circuit located in the processing path until the sound picked up by the microphone is obtained as a second signal are undefined, an appropriate delay time can be set for an input signal of an echo canceller, with the result that an appropriate echo cancellation operation can always be obtained.

As stated above, the claimed invention can achieve an appropriate echo cancellation effect, on the occasion of echo cancellation in a loudspeaker-based telephony system, regardless of signal processing circuits located in a processing path until a first signal is emitted from a speaker and in a processing path until sound picked up by a microphone is obtained as a second signal. Additionally, therefore, with the use of an echo canceller based on the claimed invention, a high-flexibility loudspeaker-based telephony system capable of being connected to whatever is used as the above signal processing circuit can also be provided.

Brief Description of Drawings

Fig. 1 is a block diagram illustrating an example configuration of an audio transmission/reception system in a video conferencing system corresponding to an embodiment of the present invention.
Fig. 2 is a block diagram illustrating an example internal configuration of an audio communication terminal device of the embodiment.
Fig. 3 is a diagram illustrating one example configuration which is suitable for an audio signal processing unit in the audio communication terminal device.
Fig. 4 is a diagram illustrating a specific example in a case where a system (circuit) whose delay time is undefined is located in a path to be subjected to echo cancellation.
Fig. 5 is a block diagram illustrating an example configuration of an audio signal processing unit serving as a first example in the embodiment.
Fig. 6 is a block diagram illustrating an example configuration of an audio signal processing unit serving as a second example in the embodiment.
Fig. 7 is a block diagram illustrating an example configuration in a case where, as an embodiment, the audio signal processing unit serving as the first example is applied in a stereo channel compatible audio communication terminal device.
Fig. 8 is a block diagram illustrating an example configuration in a case where, as an embodiment, the audio signal processing unit serving as the second example is applied in a stereo channel compatible audio communication terminal device.

Best Mode for Carrying Out the Invention

In a best mode for carrying out the claimed invention (hereinafter referred to as an embodiment), the claimed invention is applied in an audio transmission/reception system to a television conferencing system (video conferencing system).

The video conferencing system is configured such that a communication terminal device is installed at each conference room in a different place to allow this communication terminal device to transmit an image photographed by a camera device and audio picked up by a microphone to another communication terminal device and to receive an image and audio transmitted from another communication device and output them from a display device and a speaker, respectively. That is, the video conferencing system is provided with a video transmission/reception system that mutually transmits and receives an image and an audio transmission/reception system that mutually transmits and receives audio. Then, in the present embodiment, the above audio transmission/reception system is implemented by a communication terminal device (audio communication terminal device) provided for transmitting and receiving audio.

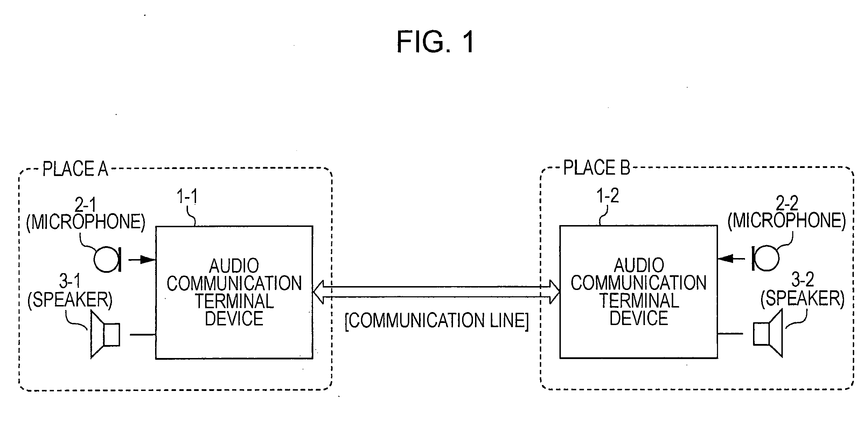

Fig. 1 illustrates an example system configuration of an audio transmission/reception system in a video conferencing system.

In this case, two places A and B that are distant from each other are assumed to be conference rooms, and audio communication terminal devices 1-1 and 1-2, which constitute the audio transmission/reception system, are installed in the places A and B, respectively. Those audio communication terminal devices 1-1 are connected via a communication line compatible with a predetermined communication scheme, and are designed so as to be capable of communicating with each other. Additionally, microphones 2-1 and 2-2 and speakers 3-1 and 3-2 are installed in the places A and B, respectively. The microphones 2-1 and 2-2 are used for picking up the voices of conference participants who are present in the places A and B, respectively, and are provided at appropriate positions in the respective places. The speakers 3-1 and 3-2 are used for listening to the voices of conference participants in other places, and are also provided at appropriate positions in the respective places. Note that, in the following explanation, audio communication terminal devices, microphones, and speakers are expressed as an audio communication terminal device 1, a microphone 2, a speaker 3, and the like unless same types located in distant places need to be specifically distinguished.

First, in the place A, an audio signal picked up and obtained by the microphone 2-1 is input to the audio communication terminal device 1-1. The audio communication terminal device 1-1 transmits the input audio signal to the audio communication terminal device 1-2 through the communication line. The audio communication terminal device 1-2 receives the audio signal transmitted in the above manner, and outputs it from the speaker 3-2. This allows the conference participants in the place B to listen to the voices of the conference participants in the place A.

Additionally, similarly, audio picked up and obtained by the microphone 2-2 in the place B is transmitted to the audio communication terminal device 1-1 by the audio communication terminal device 1-2. In the audio communication terminal device 1-1, a received audio signal is output from the speaker 3-1.

In this manner, voice-based two-way communication is performed in the audio transmission/reception system in the video conferencing system. This allows, for example, conference participants present in a certain place and conference participants present in another place to perform a conversation with each other. Additionally, in the case of this video conferencing system, it is assumed that a plurality of conference participants are present in each place, and, for the purpose thereof, the speaker 3 is provided so that all the conference participants in each place can listen to the voices of conference participants in other places. In this manner, a system in which the two-way exchange of speech is performed using a speaker is also called a loudspeaker-based telephony or the like.

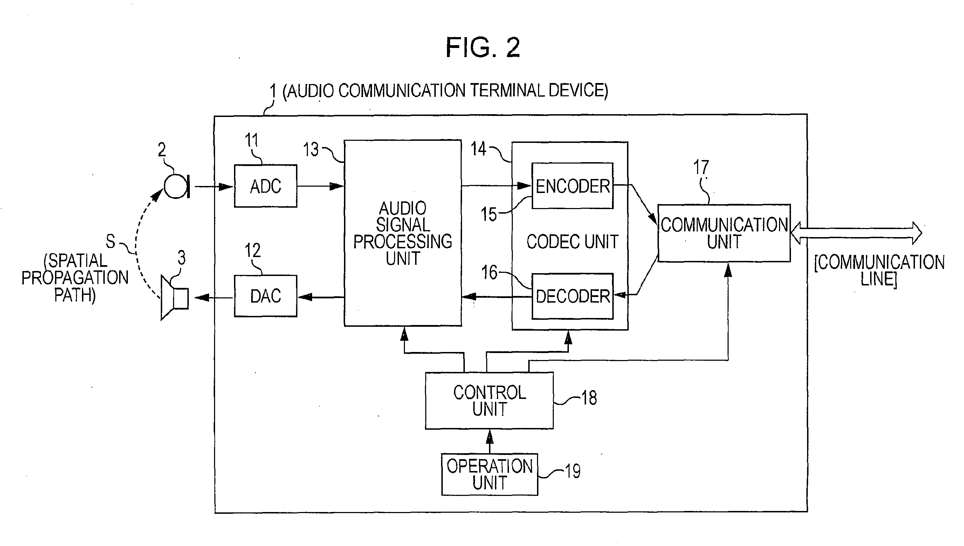

Fig. 2 illustrates an example configuration of the audio communication terminal device 1. Describing for confirmation, the audio communication terminal devices 1-1 and 1-2 illustrated in Fig. 1 are designed to commonly have the configuration illustrated in Fig. 2.

The audio communication terminal device 1 is configured to include, for example, as illustrated in this figure, an A/D converter (ADC) 11, a D/A converter (DAC) 12, an audio signal processing unit 13, a codec unit 14, a communication unit 17, a control unit 18, and an operation unit 19.

The A/D converter 11 receives an analog audio signal picked up and obtained by the microphone 2, converts the analog audio signal into a digital signal, and outputs the digital signal to the audio signal processing unit 13. Note that, in the following, it is assumed that an audio signal that is picked up and obtained by the microphone 2 in the above manner and that is to be transmitted and output to another audio communication terminal device is referred to as a transmission audio signal.

As described earlier, the loudspeaker-based telephony system causes a phenomenon such as echo or howling when used as it is. That is, as illustrated in Fig. 2, sound emitted to the space from the speaker 3 reaches the microphone 2 through a spatial propagation path (echo path) S serving as direct sound and indirect sound. That is, the voice of the other party of the call, which has been transmitted from the audio communication terminal device on the side of the other party of communication and emitted from the speaker 3, is picked up by the microphone 2, and is transmitted again to the audio communication terminal device on the side of the other party of communication. Additionally, also on the side of the other party of communication, sound emitted from the speaker is further picked up by the microphone and is transmitted to the audio communication terminal device at the one end. That is to say, in the loudspeaker-based telephony system, sound once emitted in the space is transmitted and received in such as a manner as to circulate between audio communication terminal devices. Thus, sound emitted from a speaker includes an echo-like version of the speech now being spoken by a person, which the person can hear with a certain delay time. This is an echo. If the loop is repeated a certain number of times or more, howling is caused.

Accordingly, the loudspeaker-based telephony system is typically provided with an echo canceller that avoids or reduces the occurrence of such an echo phenomenon. The audio signal processing unit 13 is configured so as to have a signal processing function serving as this echo canceller. Note that this audio signal processing unit 13 is actually configured as, for example, a DSP (Digital Signal Processor). Additionally, a configuration for echo cancellation using the audio signal processing unit 13 will be described below.

A transmission audio signal that has been subjected to echo cancellation processing by the audio signal processing unit 13 is input to an encoder 15 in the codec unit 14. The encoder 15 performs signal processing such as, for example, audio compression encoding according to a predetermined scheme on the input audio signal, and outputs a result to the communication unit 17. The communication unit 17 is designed to output the input transmission audio signal to another audio communication terminal device through the communication line in accordance with a predetermined communication scheme.

Additionally, the communication unit 17 receives a transmission audio signal transmitted from another audio communication terminal device, recovers an audio signal of a predetermined compression encoding format, and outputs the resulting audio signal to a decoder 16 in the codec unit 14. Note that it is assumed that an audio signal received and demodulated by the communication unit 17 in this manner and to be finally output from the speaker 3 is referred to as a reproduction audio signal.

The decoder 16 executes demodulation processing for the compression encoding of the input reproduction audio signal to convert the reproduction audio signal into a digital audio signal of a predetermined PCM format, and outputs the digital audio signal to the audio signal processing unit 13. The reproduction audio signal that has passed through the audio signal processing unit 13 is converted into an analog signal by the D/A converter 12 and is thereafter output. This output reproduction audio signal is finally output from the speaker 3.

The control unit 18 is configured to include a microprocessor or microcomputer configured by, for example, a CPU, a ROM, a RAM, and the like, and executes various control processes in the audio communication terminal device 1.

The operation unit 19 collectively indicates various handlers provided in the main body of the audio communication terminal device 1, and an operation signal output unit that outputs operation signals corresponding to operations on those handlers to the control unit 18. Note that this operation unit 19 may include a remote controller and a configuration designed to receive a command signal transmitted from this remote controller and output the command signal as an operation signal to the control unit 18.

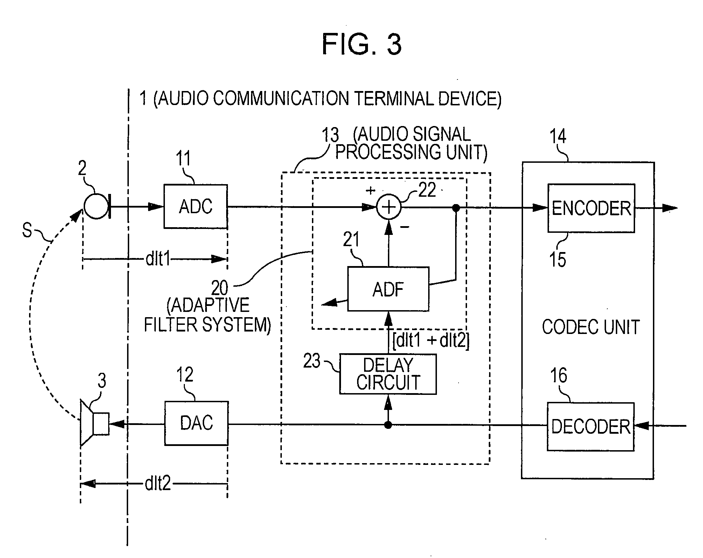

Next, an example configuration that can be duly considered in the current situation as the audio signal processing unit 13 serving as an echo canceller will be explained using Fig. 3. Note that in this figure, together with the audio signal processing unit 13, the A/D converter 11, the D/A converter 12, and the codec unit 14 (the encoder 15 and the decoder 16) are illustrated.

The audio signal processing unit 13 illustrated in Fig. 3 includes an adaptive filter system 20 and a delay circuit 23. The adaptive filter system 20 is composed of an adaptive filter 21 and a subtractor 22.

A system input signal to the adaptive filter system 20 is designed to be input to an input terminal of the adaptive filter 21, and has a form in which, in this case, a signal output from the delay circuit 23 is input. The delay circuit 23 is designed to receive a reproduction audio signal that is in the stage of being output from the decoder 16 and input to the D/A converter 12. Note that the delay time set in the delay circuit 23 will be described below.

Additionally, the subtractor 22 is provided so as to subtract an output signal (canceling signal) of the adaptive filter 21 from the transmission audio signal that is in the stage of being input from the A/D converter 11 to the encoder 15. In the adaptive filter system 20, therefore, a signal (desired signal) to be input to the subtractor 22 as a processing target because it includes a signal component to be canceled becomes a transmission audio signal that is in the stage of being output from the A/D converter 11 and input to the encoder 15. Additionally, while the output signal of the adaptive filter system 20 is output from the subtractor 22, a signal output from the subtractor 22, which is input to the adaptive filter 21, is referred to as an error signal or a residual signal.

In this configuration, the adaptive filter 21 of the adaptive filter system 20 captures, as a system input signal, a reproduction audio signal that is in the stage of being output from the decoder 16 and input to the D/A converter 12 although it has passed through the delay circuit 23.

Although the inside of the adaptive filter 21 is not explained with reference to the drawings, the adaptive filter 21 includes an FIR (Finite Impulse Response) digital filter of required order through which the above system input signal passes, and a coefficient setting circuit capable of variably setting the coefficient of this digital filter (filter coefficient). An output signal (canceling signal) of the adaptive filter 21 is output from the above digital filter.

Then, the adaptive filter 21 is designed to modify and set a filter coefficient of a coefficient multiplier of required order stage using the coefficient setting circuit in such a manner that an output signal (canceling signal) that minimizes a residual amount indicated by the above error signal can always be obtained.

As a consequence, a coefficient vector (corresponding to a sequence of coefficients according to the order stage) of the adaptive filter 21 forms an impulse response that expresses a pseudo-transfer function of a transfer path (hereinafter also referred to as a cancellation sound transfer path) until a reproduction audio signal (first audio signal) in the stage of being input to the D/A converter 12 is output from the speaker 3, then picked up by the microphone 2 through the spatial propagation path S, and further input to the subtractor 22 of the adaptive filter system 20 through the A/D converter 11 as a processing target signal (desired signal: second signal). This operation is, that is to say, an operation of adaptively canceling a signal component of sound obtained through the above cancellation sound transfer path in accordance with the state of the current state of the processing target signal.

Then, the sound that passes through the above transfer path is, as can also be seen from the fact that it passes through the spatial propagation path S serving as an echo path, a component of echo sound that is based on the reproduction audio signal. Therefore, the output signal (canceling signal) of the adaptive filter 21 can be regarded as a pseudo-echo for the reproduction audio signal. In the adaptive filter system 20, the subtractor 22 subtracts this pseudo-echo sound for this reproduction audio signal from the transmission audio signal. In this manner, the audio signal processing unit 13 is designed to execute the operation of adaptively removing the component of the echo sound from the transmission audio signal. Then, the audio communication terminal device 1 is designed to transmit the audio signal from which this component of the echo sound has been removed to the audio communication terminal device on the side of the other party of communication. Thus, the echo sound is also removed from sound that is heard through a speaker from which an audio signal received by the audio communication terminal device on the side of the other party of communication is emitted. Accordingly, the echo cancellation effect is generated.

Incidentally, the target that is removed by the audio signal processing unit 13 in the above manner is sound passing through the above cancellation sound transfer path. First, as illustrated in the figure, the A/D converter 11 is located as a signal processing section in a path (first path) until sound picked up by the microphone 2 is obtained as a processing target signal by the subtractor 22 of the adaptive filter system 20. Additionally, although not illustrated in the figure, a certain signal processing section other than the A/D converter 11 may also possibly be located in this first path. Then, depending on the signal processing executed by those signal processing units, a transmission delay of a signal passing through this path occurs in accordance with the processing time. In the figure, this transmission delay time is represented by dlt1.

Similarly, a state is illustrated in which at least the D/A converter 12 is also located as a signal processing section in a path (second path) until a reproduction audio signal input as a system input signal to the adaptive filter system 20 through the delay circuit 23 reaches the speaker 3. Furthermore, a certain signal processing section other than the D/A converter 12 may also possibly be located in the second path. Therefore, a transmission delay of this signal passing through the second path also occurs in accordance with the processing time. In the figure, this transmission delay time is represented by dlt2.

Accordingly, in this case, the delay circuit 23 is designed such that a delay time represented by dlt1 + dlt2, which is given by adding the above transmission delay times dlt1 and dlt2, is set.

Thus, as the system input signal, a signal that is output from the decoder 16 and that is to be input to the side of the D/A converter 12 is delayed by the time represented by dlt1 + dlt2 and is input to the adaptive filter system 20. As a consequence, it is only required for the adaptive filter system 20 to generate a cancellation signal only for the sound propagating through the spatial propagation path S in the cancellation sound transfer path.

For example, if it is assumed that the delay circuit 23 is omitted from the configuration of the audio signal processing unit 13 illustrated in Fig. 3, a cancellation signal to be generated correspondingly by the adaptive filter system 20 will be sound that is transferred along the above cancellation sound transfer path, and therefore, the cancellation signal should have a characteristic reflecting a transmission delay time of dlt1 + dlt2. Such a transmission delay time resulting from the signal processing delay causes a considerably large amount of delay in terms of echo cancellation processing. Therefore, there is a possibility that it is difficult for errors to decrease and converge within a certain range and that sufficient echo cancellation performance cannot be achieved. Additionally, the need occurs to increase the order number (number of taps) of the adaptive filter 21 configured by, for example, an FIR filter in accordance with the transmission delay time, which involves, for example, the increase in the amount of coefficient computation to cause the need to ensure, for example, a large number of resources. This leads to an increase in processing load, cost, circuit size, and the like.

In contrast, with the configuration illustrated in Fig. 3, as also stated above, the adaptive filter system 20 performs processing only on the sound propagating through the spatial propagation path S in the cancellation sound transfer path, and a favorable echo cancellation effect can be expected. Additionally, only a small number of taps or the like necessary for the adaptive filter 21 and simple computation processing are required, which is also beneficial for cost or circuit size.

In the configuration illustrated in Fig. 3, however, the delay time set in the delay circuit 23 is fixed, and a delay time is not permitted to be changed once it has been set. Therefore, in order to obtain an appropriate echo cancellation effect, it is necessary to study in advance the transmission delay time dlt1 for the first path and the transmission delay time dlt2 for the second path and to set the delay time of the delay circuit 23 on the basis of the studied transmission delay times dlt1 and dlt2. That is to say, it is necessary that both the transmission delay time dlt1 for the first path and the transmission delay time dlt2 for the second path be known.

However, in actuality, a situation occurs in which at least one of the above transmission delay times dlt1 and dlt2 is not known or, even further, may be changed depending on the use environment.

As a specific example, for example, in the case of a video conferencing system, the following situation can be considered.

In a video conferencing system, in each place where a conference is held, it is necessary to display video, which has been transmitted from the side of the other party of communication, and to emit audio, which has been transmitted from the side of the other party of communication, from a speaker. For the propose of displaying video and emitting audio from the speaker, a television receiver, a display monitor having a speaker, and the like are often used.

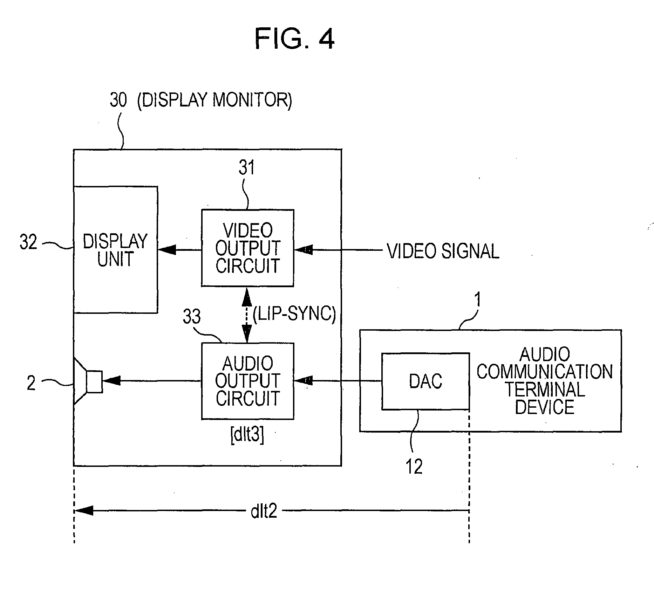

That is, for example, in the manner as illustrated in Fig. 4, a single display monitor 30 is designed such that a video signal, which has received and acquired by a video communication terminal device not illustrated herein and has been transmitted from the side of the other party of communication, is input and that an audio signal, which has been received and acquired by the audio communication terminal device 1 and has been transmitted from the side of the other party of communication which is the same as above, is input. Such signals can be input by, for example, in practice, connecting a video input terminal provided in the display monitor 30 to a video output terminal on the side of the video communication terminal device using a cable and, similarly, connecting an audio input terminal provided in the display monitor 30 to an (analog) audio output terminal of the audio communication terminal device 1.

Then, in the display monitor 30, the input video signal is subjected to predetermined signal processing for display by a video output circuit 31 and is displayed as an image by a display unit 32. Additionally, required signal processing, amplification, and the like are performed on the input audio signal by an audio output circuit 33, and the speaker 3 is driven to emit the resulting audio signal from the speaker 3 as sound.

In the current situation, generally, a television receiver or a display device such as a display monitor performs image processing by performing digital signal processing. Such digital image signal processing requires a certain amount of processing time or more. This processing time is different depending on its signal processing procedure, scheme, and the like, and is therefore, needless to say, different, for example, from manufacturer to manufacturer, or may be different, even for the same manufacturer, depending on the model. On the other hand, audio output processing can provide, as compared to digital image signal processing, a short processing time. However, it is necessary to reproduce and output audio in synchronization with video, called lip-sync. For the purpose thereof, in audio output processing, the output timing of an audio signal is delayed only by a required amount of time in order to achieve the synchronization with video.

Then, for example, also in the display monitor 30 of Fig. 4, the video output circuit 31 executes digital image signal processing in the manner as above, and accordingly, in the audio output circuit 33, a certain amount of delay time for an audio signal is set and output for the purpose of lip-sync, thus allowing, in the manner as illustrated in the figure, the audio output circuit 33 to have a transmission delay time dlt3 corresponding to the setting of the above delay time. As can also be understood from the foregoing explanation, this transmission delay time dlt3 is different depending on the manufacturer, model, and the like of the display monitor 30. That is, in a case where a display monitor or television receiver used in a video conferencing system is undefined, the above transmission delay time dlt3 is not known either, and is undefined. Since this transmission delay time dlt3 is included in the second path, eventually, the transmission delay time dlt2 for the second path is undefined.

In this manner, in the configuration of Fig. 3, in a situation where at least one of the transmission delay times dlt1 and dlt2 for the first and second paths is undefined, depending on the display monitor or television receiver to be connected, the delay time set in the delay circuit 23 may not necessarily be suitable, resulting in non-achievement of a favorable echo cancellation effect.

Accordingly, as the present embodiment, in the manner as stated above, the audio signal processing unit 13 is configured so as to support even a situation where at least one of the transmission delay times dlt1 and dlt2 is undefined so that an appropriate echo cancellation operation can always be obtained. This enables, for example, as a specific merit, achievement of an echo cancellation effect which is always favorable regardless of the manufacturer or model of the display monitor or television receiver used for video/audio output.

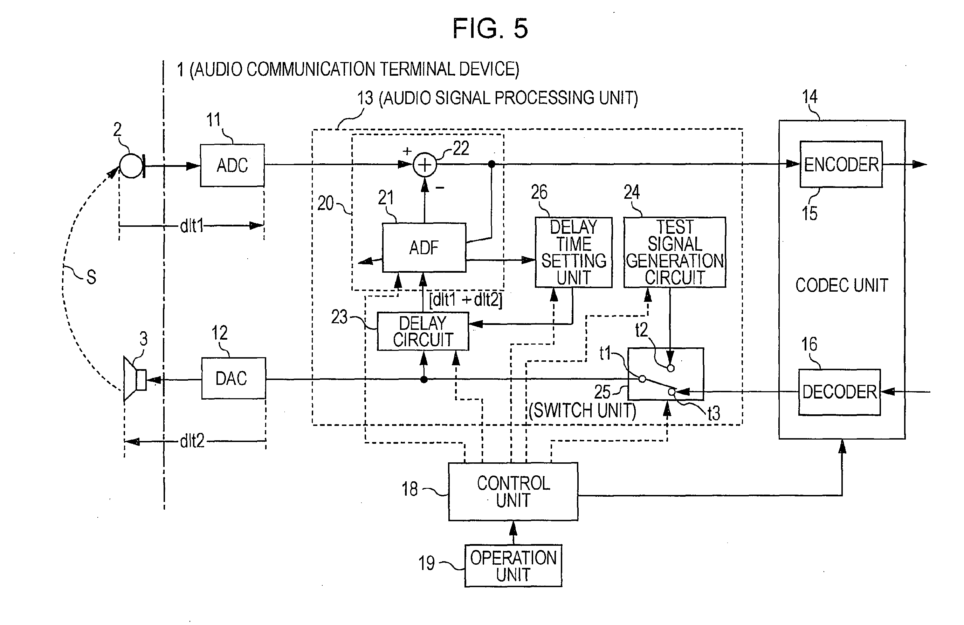

Fig. 5 illustrates a first example serving as a configuration of the audio signal processing unit 13 according to the present embodiment. Note that in this figure, the same portions as those in Fig. 3 are assigned the same numerals and explanation thereof is omitted.

The audio signal processing unit 13 corresponding to this first example includes, in addition to the configuration of Fig. 3, a test signal generation circuit 24, a switch unit 25, and a delay time setting unit 26. Additionally, in this case, the delay circuit 23 is designed to have a delay time which is variable under control from outside.

With the provision of this configuration, in an environment where the transmission delay times dlt1 and dlt2 are undefined, an operation equivalent to specifying the actual transmission delay times dlt1 and dlt2 is executed in the manner as explained in the following, thereby setting an appropriate delay time represented by dlt1 + dlt2 in the delay circuit 23.

Before a delay time is set in the delay circuit 23, first, a user places the microphone 2 and the speaker 3, which are used together with the audio communication terminal device 1, so that they are brought face-to-face so as to be as close to each other as possible. This is intended to decrease the transmission delay in a path interval of the spatial propagation path S in the cancellation sound transfer path to 0 as much as possible. Ideally, the spatial propagation path S with a transmission delay of 0 would allow a transmission delay in a cancellation sound transfer path to be formed of only a delay via a circuit such as a signal processing circuit, called system delay or the like.

Next, the user performs a predetermined operation on the operation unit 19 for starting the operation of setting a delay time in the delay circuit 23 (delay time setting mode operation). In accordance with this operation, first, the control unit 18 causes the switch unit 25 to connect a terminal t2 to a terminal t1, thus allowing the formation of the state where an output signal of the test signal generation circuit 24 is supplied to a path for a reproduction audio signal. In addition to this, the control unit 18 causes the test signal generation circuit 24 to start outputting a test signal.

Note that white noise can be used as this test signal output from the test signal generation circuit 24. White noise has a uniform intensity across all frequency bands, and is preferable for impulse response measurement. However, test signals are not to be limited only to white noise, and, in addition, for example, a TSP (Time Stretched Pulse) signal or the like may be suitably employed because it has a uniform intensity across all frequency bands.

Additionally, the control unit 18 sets the delay time of the delay circuit 23 to 0. That is, a system input signal is input to the adaptive filter 21 of the adaptive filter system 20 without being delayed. This can omit the delay circuit 23, and can achieve the same circuit form as that in which the adaptive filter system 20 directly receives a test signal. Note that a configuration can also be conceived in which switching can be performed using, for example, a switch or the like between a path along which a signal in the input stage of the delay circuit 23 passes through the delay circuit 23 and a path along which the signal bypasses the delay circuit 23 and in which at the time of this delay time setting mode operation, a signal is input to the adaptive filter 21 using the path that allows the signal to bypass the delay circuit 23.

Then, under this condition, the control unit 18 is designed to activate the adaptive filter system 20, the A/D converter 11, and the D/A converter 12.

Additionally, describing for confirmation, as illustratively described with reference to Fig. 4, in a case where a certain audio reproduction circuit is located between the audio communication terminal device 1 and the speaker 3, this audio reproduction circuit is also activated.

Under the above operation state, the test signal output from the test signal generation circuit 24 is input to the D/A converter 12 via the switch unit 25. This allows the test signal to be emitted as sound from the speaker 3, further picked up by the microphone 2, and input to the subtractor 22 of the adaptive filter system 20 via the A/D converter 11.

Additionally, the test signal is input to the D/A converter 12, and is branched and also input to the adaptive filter system 20 (adaptive filter 21) from the delay circuit 23. At this time, the adaptive filter system 20 sets, as an output signal (error signal) of the subtractor 22, a coefficient vector of the adaptive filter 21 so as to minimize the test signal component.

The operation of variably setting a coefficient vector in the adaptive filter 21 can be regarded as being equivalent to the measurement of an impulse response corresponding to a transfer function of a path (cancellation sound transfer path) until a signal input to the adaptive filter 21 appears in the subtractor 22. Then, the set coefficient vector corresponds to this appearance time of the impulse response. That is, if the appearance time of the impulse response is early, the peak of energy in the coefficient vector is obtained in an order (tap) in the forward side which is close to the input. Conversely, if the appearance time of the impulse response is late, the peak of energy in the coefficient vector is obtained in an order in the rearward side which is far from the input. Then, the appearance period of time of the impulse response substantially corresponds to the transmission delay in a path until the signal appears in the cancellation sound transfer path. Therefore, the peak of energy in the coefficient vector resides in a forward order as the transmission delay obtained in the cancellation sound transfer path decreases, and resides in a forward order as the transmission delay increases.

That is to say, the coefficient vector obtained at this time can be regarded as representing a time difference (propagation time difference) in a path (cancellation sound transfer path) until a signal (first signal) at the input stage to the D/A converter 12, which is the start point of the cancellation sound transfer path, is emitted from the speaker, picked up by the microphone, and appears as a signal component that forms a processing target signal (second signal) input to the subtractor 22, which is the endpoint.

In addition to this, in this delay time setting operation mode, since the microphone 2 and the speaker 3 are placed so as to be as close to each other as possible, as also described earlier, the transmission delay (transfer function) of the spatial propagation path S may be negligible and therefore the transmission delay in the cancellation sound transfer path is only a system delay. Additionally, in this operation mode, the path of a system input signal which is input to the adaptive filter 21 has a circuit form equivalent to that in which the delay circuit 23 is bypassed.

If so, the coefficient vector of the adaptive filter 21 in the state where the adaptive filter system 20 converges in the delay time setting operation mode has a peak position of energy corresponding to only the system delay time in the cancellation sound transfer path. That is, the propagation time difference between the start point and endpoint of the cancellation sound transfer path indicated by the current coefficient vector corresponds to the system delay time. Accordingly, in this case, the delay time setting unit 26 is designed to capture the content of the coefficient vector obtained in this manner from the adaptive filter 21 and to perform, for example, computation or the like using a predetermined function on the basis of the peak position of the energy indicated by this coefficient vector to determine a transmission delay time corresponding to this coefficient vector. The transmission delay time determined in this manner is, that is to say, a system delay time represented by dlt1 + dlt2. Then, the delay time setting unit 26 is designed to set the delay time corresponding to the determined system delay time in the delay circuit 23.

This allows the delay time represented by dlt1 + dlt2 to be set in the delay circuit 23. In this case, however, for example, as explained with reference to Fig. 4, the delay time dlt1 + dlt2 may possibly contain the transmission delay time dlt3 which is undefined. That is to say, depending on the delay time setting operation of the present embodiment, even when a circuit (transmission path) whose transmission delay time is unknown is located in the cancellation sound transfer path, the system delay time in the cancellation sound transfer path including the transmission delay time of this circuit (transmission path) is appropriately determined, and the corresponding delay time can be set in the delay circuit 23.

Note that, describing for confirmation, depending on the delay time setting operation of the present embodiment, as illustrated as it is in Fig. 4, it is possible to specify only the system delay time in the cancellation sound transfer path not only in a case where the transmission delay time dlt3 which is undefined is included in the transmission delay dlt2 for the transfer path from the input of the D/A converter 12 to the speaker 3 but also in a case where the transmission delay time dlt3 which is undefined is included in the transmission delay dlt1 for the transfer path from the microphone 2 to the input to the subtractor 22. Furthermore, even when both the transmission delays dlt2 and dlt3 contain an undefined transmission delay time, it is possible to specify only the system delay time in the cancellation sound transfer path in a similar manner.

Then, a delay time is set in the delay circuit 23 in the above manner, thus terminating the delay time setting operation mode. On the occasion of the termination thereof, the control unit 18 switches the switch unit 25 to the state where the terminal t3 is connected to the terminal t1 so that the state where the reproduction audio signal from the decoder 16 can be input to the delay circuit 23 and the D/A converter 12 is entered. Additionally, the control unit 18 stops the output operation of a test signal from the test signal generation circuit 24. Additionally, also in the subsequent processing, the delay time set in the current delay time setting operation mode is continuously set in the delay circuit 23.

Then, in the subsequent processing, the user rearranges the microphone 2 and the speaker 3 to appropriate positions in accordance with the environment used for a conference and, in addition, performs a conference or the like using the audio communication terminal device 1 of the present embodiment in a usual manner. At this time, the delay circuit 23 outputs, as a system input signal, the reproduction audio signal delayed by the delay time set in the above delay time setting operation. At this time, the adaptive filter system 20 executes adaptive processing for echo cancellation on only the transfer function of the spatial propagation path (echo path) S according to the actual arrangement positions of the microphone 2 and the speaker 3.

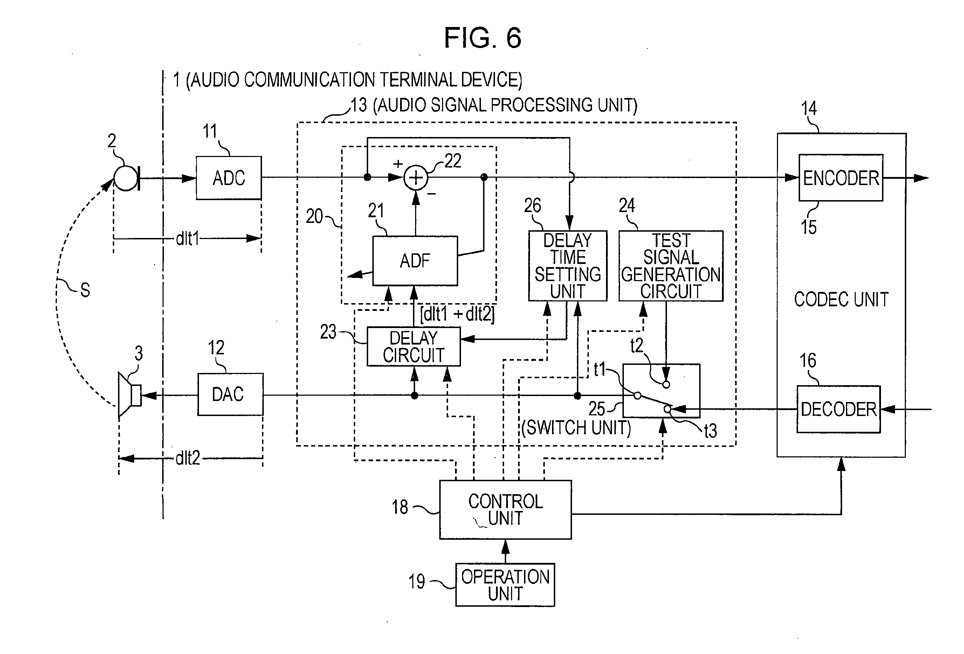

Subsequently, a second example as a configuration of the audio signal processing unit 13 according to the present embodiment will be explained with reference to Fig. 6. Note that in this figure, the same portions as those in Fig. 5 are assigned the same numerals and explanation thereof is omitted.

In this second example, instead of inputting information indicating a coefficient vector from the adaptive filter 21, each of a transmission audio signal to be input to the subtractor 22 and an input signal (reproduction audio signal) to the delay circuit 23 is branched and input to the delay time setting unit 26.

In this second example, for example, when the delay time setting operation mode is set in accordance with a user operation, first, in a manner similar to that in the first example, the microphone 2 and the speaker 3 are brought face-to-face so as to be as close to each other as possible and, additionally, the terminals t1 and t2 of the switch unit 25 are connected to each other so as to output a test signal from the test signal generation circuit 24. In the delay time setting operation mode in the second example, however, as can be understood from the subsequent explanation, there is no necessity to cause the adaptive filter 21 to operate. Additionally, in connection with this, also there is no need to specially set the delay time of the delay circuit 23 to 0.

In the circuit form as the above delay time setting operation mode, first, a test signal output from the test signal generation circuit 24 is input to the D/A converter 12 and is, at the same timing, input to the delay time setting unit 26. This input signal is herein referred to as a first reference input signal. Additionally, the test signal from the test signal generation circuit 24 is transferred along the subsequent reproduction audio signal path, emitted as sound from the speaker 3 through the D/A converter 12, and further picked up by the microphone 2. The test signal is transferred along the transmission audio signal path, and is input to the subtractor 22 via the A/D converter 11. At the same timing, the test signal is input to the delay time setting unit 26. This input signal is referred to as a second reference input signal.

The first and second reference input signals are input to the delay time setting unit 26 in the above manner. This means that a signal obtained at the start point of the cancellation sound transfer path and a signal obtained at the end point are input. Accordingly, the delay time setting unit 26 is designed to determine a time difference between the timing when a test signal of a predetermined waveform, which is formed as the first reference input signal, is input and the timing when the waveform of the same test signal is input as the second reference input signal. The first reference input signal is a signal that is branched and input to the delay circuit 23 and the D/A converter 12, and the second reference input signal is a signal that is output from the A/D converter 11 and that is input to the subtractor 22. Therefore, the above time difference is, that is to say, the system transmission delay time. Accordingly, the delay time setting unit 26 is designed to set the delay time corresponding to this determined time difference in the delay circuit 23.

Note that the delay time setting unit 26 in the second example is configured to determine a time difference where the first reference input signal is delayed and appears as the second reference input signal in the above manner. Thus, the cross-correlation function below can be generated using a signal having no periodicity, such as white noise, as a test signal, and $\tau$ (= $\tau$xy) that maximizes the output thereof can be utilized as a delay time:

$$\phi xy(\tau) = \sum x(n) * y(n+\tau), \quad (n = 0, \ldots, N-1)$$

Alternatively, it is also possible to more simply measure a delay time using, for example, an audio signal having a waveform corresponding to pulse sound or the like as a test signal.

When a delay time is set in the delay circuit 23 in the above manner, the control unit 18 terminates the delay time setting operation mode. At this time, in a manner similar to that in the first example, the switch unit 25 is switched to the state where the terminals t1 and t3 are connected to each other so that the output of the test signal from the test signal generation circuit 24 is stopped. Then, also in the subsequent processing, the delay time set in the current delay time setting operation mode is continuously set in the delay circuit 23.

This allows, also as the second example, the adaptive filter system 20 to execute adaptive processing for echo cancellation on only the transfer function of the spatial propagation path (echo path) S according to the actual arrangement positions of the microphone 2 and the speaker 3.

Incidentally, in the foregoing embodiment, the explanation has been given on the assumption that the most basic configuration in which monaural channel audio is transmitted and received is used as an audio channel configuration. However, also in practice, it is also known that L (left) and R (right) stereo channel audio is transmitted and received in a video conferencing system or the like.

Accordingly, as another embodiment, an example configuration in which the audio signal processing unit 13 as the present embodiment is applied in the audio communication terminal device 1 configured to perform stereo channel transmission and reception will be explained. First, a case where the configuration of the audio signal processing unit 13 as the first example is applied will be explained.

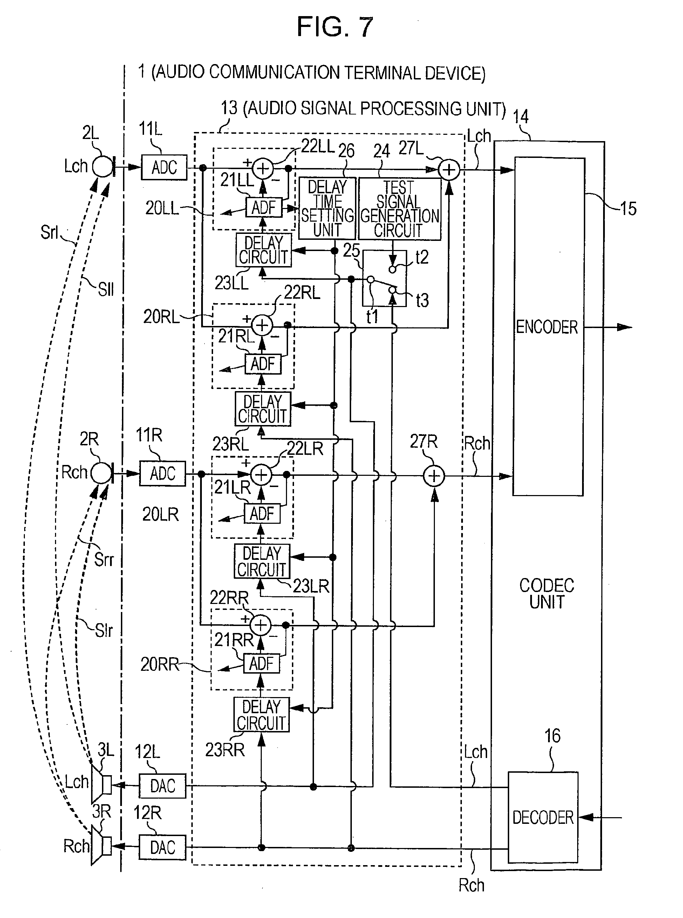

Fig. 7 illustrates an example configuration of the audio signal processing unit 13 in which the above first example is applied in a stereo channel compatible audio communication terminal device 1. Note that in this figure, the same portions as those in Fig. 5 are assigned the same numerals and explanation thereof is omitted. Additionally, in this figure, the illustration of the control unit 18 and control signals from this control unit 18 to the adaptive filter 21, the delay circuit 23, the test signal generation circuit 24, the switch unit 25, the delay time setting unit 26, and the like (in Fig. 5, arrows indicated by broken lines) is omitted.

In a stereo channel video conferencing system, as also illustrated in Fig. 7, two microphones 2L and 2R corresponding to the L and R channels, respectively, are provided and, correspondingly, also as speakers, two speakers 3L and 3R corresponding to the L and R channels, respectively, are provided.

Then, the audio communication terminal device 1 includes, first, two A/D converters 11L and 11R corresponding to the above microphones 2L and 2R. The A/D converter 11L converts an audio signal picked up and obtained by the microphone 2L into a digital signal and outputs the digital signal, and the A/D converter 11R converts an audio signal picked up and obtained by the microphone 2R into a digital signal and outputs the digital signal.

In this case, the audio signal processing unit 13 is provided with four adaptive filter systems 20LL, 20RL, 20LR, and 20RR. Note that it is assumed that the connection form of adaptive filters 21LL, 21RL, 21LR, and 21RR, subtractors 22LL, 22RL, 22LR, and 22RR, and delay circuits 23LL, 23RL, 23LR, and 23RR provided before the input terminals of the adaptive filters 21LL, 21RL, 21LR, and 21RR, which form those adaptive filter systems 20LL, 20RL, 20LR, and 20RR, is similar to that of Figs. 5 and 6.

A transmission audio signal output from the A/D converter 11L corresponding to the L channel is branched and input to the subtractors 22LL and 22RL in the adaptive filter systems 20LL and 20RL. Additionally, signals output from the subtractors 22LL and 22RL are summed and combined by an adder 27L, and, in addition, a resulting signal is input to the encoder 15L as a transmission audio signal of the L channel.

Additionally, a transmission audio signal output from the A/D converter 11R corresponding to the R channel is branched and input to the subtractors 22LR and 22RR in the adaptive filter systems 20LR and 20RR. Additionally, signals output from the subtractors 22LR and 22RR are summed and combined by an adder 27R, and, in addition, a resulting signal is input to the encoder 15 as a transmission audio signal of the R channel.

In this case, the encoder 15 executes a stereo channel compatible audio compression encoding process. That is, the encoder 15 compresses and encodes the input audio signals of the L and R channels to generate a single compressed encoded audio signal in a predetermined stereo format, and outputs this audio signal to the communication unit 17.

Additionally, in this case, the decoder 16 receives the compressed encoded audio signal of the stereo format, which has been transmitted from the audio communication terminal device on the side of the other party and is obtained by reception and demodulation by the communication unit 17, executes a decoding process, and outputs, for example, reproduction audio signals of the L and R channels in a predetermined PCM signal format.

The reproduction audio signal of the L channel is output to the D/A converter 12L corresponding to the L channel. Additionally, together with this, this reproduction audio signal of the L channel is also output to the terminal t3 of the switch unit 25. In the state where the terminal t3 is connected to the terminal t1 in the switch unit 25, the reproduction audio signal of the L channel is input to the delay circuit 23LL through this switch unit 25. Additionally, this reproduction audio signal of the L channel is also output to the delay circuit 23LR corresponding to the adaptive filter system 20LR.

Additionally, the reproduction audio signal of the R channel is output to the D/A converter 12 corresponding to the R channel, and is also output to the delay circuit 23RL corresponding to the adaptive filter system 20RL and the delay circuit 23RR corresponding to the adaptive filter system 20RR.

In the configuration as this stereo channel compatible loudspeaker-based telephony system illustrated in Fig. 7, a spatial propagation path Sll that reaches the microphone 2L of the L channel from the speaker 3L of the L channel, a spatial propagation path Srl that reaches the microphone 2L of the L channel from the speaker 3R of the R channel, a spatial propagation path Slr that reaches the microphone 2R of the R channel from the speaker 3L of the L channel, and a spatial propagation path Srr that reaches the microphone 2R of the R channel from the speaker 3R of the R channel exist as spatial propagation paths S.

Then, a circuit unit composed of the adaptive filter system 20LL and the delay circuit 23LL, a circuit unit composed of the adaptive filter system 20RL and the delay circuit 23RL, a circuit unit composed of the adaptive filter system 20LR and the delay circuit 23LR, and a circuit unit composed of the adaptive filter system 20RR and the delay circuit 23RR are designed to be used for canceling echo sound generated through the spatial propagation paths Sll, Srl, Slr, and Srr, respectively.

That is, the circuit unit composed of the adaptive filter system 20LL and the delay circuit 23LL is designed to capture the reproduction audio signal of the L channel as a system input signal and to input the transmission audio signal of the L channel serving as a processing target signal to the subtractor 22LL, thus canceling the component of the echo sound propagating along the spatial propagation path Sll.

Additionally, the circuit unit composed of the adaptive filter system 20RL and the delay circuit 23RL is designed to capture the reproduction audio signal of the R channel as a system input signal and to input the transmission audio signal of the L channel serving as a processing target signal to the subtractor 22RL, thus canceling the component of the echo sound propagating along the spatial propagation path Srl.

Then, audio signals output from the subtractors 22LL and 22LR of the above circuit units are summed and combined by the adder 27L, and thereby a transmission audio signal in which the components of the echo sound propagating along the spatial propagation paths Sll and Srl have been removed is output from the adder 27L.

Additionally, the circuit unit composed of the adaptive filter system 20LR and the delay circuit 23LR is designed to capture the reproduction audio signal of the L channel as a system input signal and to input the transmission audio signal of the R channel serving as a processing target signal to the subtractor 22LR, thus canceling the component of the echo sound propagating along the spatial propagation path Slr.

Additionally, the circuit unit composed of the adaptive filter system 20RR and the delay circuit 23RR is designed to capture the reproduction audio signal of the R channel as a system input signal and to input the transmission audio signal of the R channel serving as a processing target signal to the subtractor 22RR, thus canceling the component of the echo sound propagating along the spatial propagation path Srr.

Then, audio signals output from the subtractors 22LR and 22RR of the above circuit units are summed and combined by the adder 27R, and thereby a transmission audio signal in which the components of the echo sound propagating along the spatial propagation paths Slr and Srr have been removed is output from the adder 27R.

In addition to this, in this configuration illustrated in Fig. 7, one set of a test signal generation circuit 24, a switch unit 25, and a delay time setting unit 26, which are similar to those of Fig. 5, is provided.

In this case, the delay time setting unit 26 is provided so as to capture information about the coefficient vector set in the adaptive filter 21LL of the adaptive filter system 20LL among the four adaptive filter systems 20LL, 20RL, 20LR, and 20RR. In correspondence with this, the switch unit 25 is designed to connect the terminal t1 to the delay circuit 23LL and connect the terminal t3 to a reproduction audio signal line of the L channel. The terminal t2 is connected to, for example, the test signal output of the test signal generation circuit 24. In addition to this, in this case, the delay time setting unit 26 is configured to branch and output a control signal for setting a delay time not only to the delay circuit 23LL but also to the other three delay circuits 23RL, 23LR, and 23RR.

For example, in a case where it is considered that stereo compatible unit is located as the audio output circuit 33 as illustrated in Fig. 4, the transmission delay time dlt3 in this audio output circuit 33 may be regarded as being the same between the L and R channels. The reason is that, for example, in terms of the meaning that the audio output timing is synchronized with the video output timing on the side of the video output circuit 31 for the purpose of lip-sync (that is to say, a delay time is given), it is necessary to give the same delay time to the L channel audio and the R channel audio. Additionally, the transmission delay time of each of the A/D converters 11L and 11R and the transmission delay time of each of the D/A converters 12L and 11R may also be regarded as being the same as each other. Focusing on this fact, if a system delay time is specified in correspondence with one of the L and R channels, that is to say, for only a cancellation sound transfer path including one of the spatial propagation paths Sll, Srl, Slr, and Srr, this system delay time can be said to exist in the same manner also in the other three cancellation sound transfer paths. That is, this implies that if a delay time of a delay circuit corresponding to a system delay in one cancellation sound transfer path is determined, this delay time can be commonly set in each of the four delay circuits 23LL, 23RL, 23LR, and 23RR.

Accordingly, the configuration of Fig. 7 is designed such that a coefficient vector corresponding to the system delay time is determined for a cancellation sound transfer path including the spatial propagation path Sll and that a delay time obtained on the basis of this coefficient vector is commonly set in the four delay circuits 23LL, 23RL, 23LR, and 23RR. Also in the audio communication terminal device 1 in which a delay time has been set in this manner, the subsequent echo cancellation operation can be correctly executed.

Then, such a configuration would not require a circuit unit composed of the test signal generation circuit 24, the switch unit 25, and the delay time setting unit 26 for setting a delay time to be provided in correspondence with each of the four adaptive filter systems 20.

Note that describing for confirmation, in order to allow the audio communication terminal device 1 of the configuration of Fig. 7 to perform the setting of a delay time, a user arranges the microphone 2L and speaker 3L of the L channel so as to be as close to each other as possible.

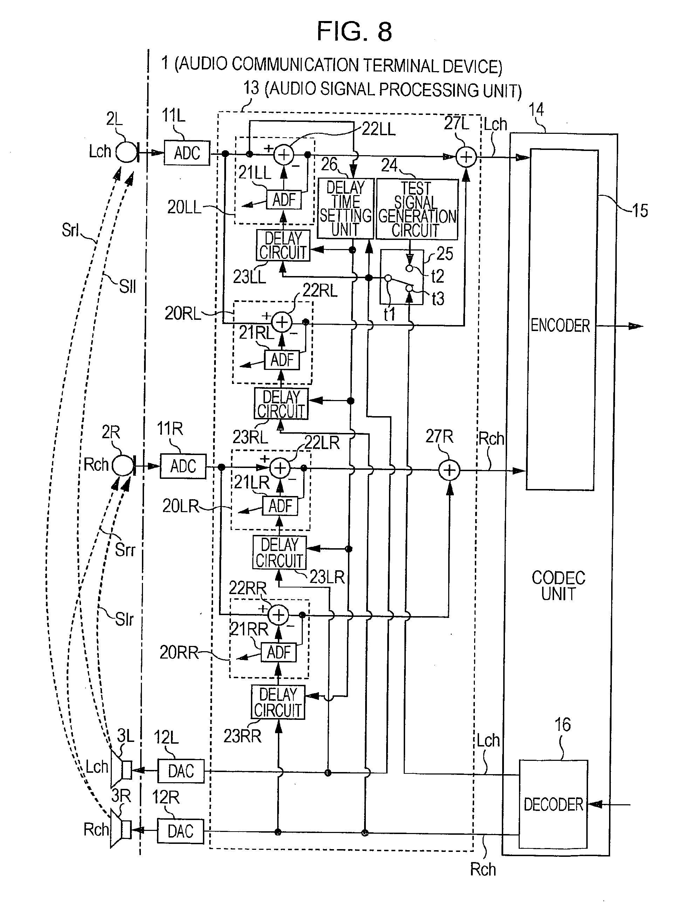

Fig. 8 is a block diagram illustrating an example configuration of the audio signal processing unit 13 in which the second example illustrated earlier in Fig. 6 is applied in the stereo channel compatible audio communication terminal device 1. Note that in this figure, the same portions as those in Figs. 6 and 7 are assigned the same numerals and explanation thereof is omitted.

In this figure, a circuit unit composed of the adaptive filter system 20LL and the delay circuit 23LL is provided with a circuit unit (the test signal generation circuit 24, the switch unit 25, and the delay time setting unit 26) for setting a delay time corresponding to the configuration in the second example.

Then, in this case, the delay time setting unit 26 is designed to determine a time difference between a first reference input signal that is a reproduction audio signal corresponding to the L channel and a second reference input signal that is a transmission audio signal of the L channel. While this time difference is a system delay time in a cancellation sound transfer path including the spatial propagation path SII, according to the foregoing description, the time difference is the system delay time in the other three cancellation sound transfer paths. Then, the delay time setting unit 26 is designed to commonly set the delay time corresponding to the determined time difference in each of the delay circuits 23LL, 23RL, 23LR, and 23RR. Also in the audio communication terminal device 1 in which a delay time has been set in this manner, the subsequent echo cancellation operation can be correctly executed.

Note that, for example, as an adaptive algorithm employed as the adaptive filter 21 (21LL, 21RL, 21LR, 21RR), as well as those hitherto known, in the future, one of techniques proposed from now on, which is regarded as being appropriate, may be selected.

Additionally, in the foregoing embodiment, the audio signal processing unit 13 serving as an echo canceller has been explained as executing digital signal processing. For example, the claimed invention can also be applied in a case where at least a portion of a similar echo cancellation operation is to be configured by an analog circuit.

Additionally, while the explanation of the foregoing embodiment is based on the assumption that the two audio communication terminal devices 1-1 and 1-2 communicate with each other in a one-to-one relationship in a video conferencing system, this is an example which is the simplest as a video conferencing system in consideration of simple explanation. Therefore, in practice, it can also be conceived that a video conferencing system is established by three or more audio communication terminal devices to allow for one-to-many communication. Even in such a system configuration, a configuration based on the claimed invention can be applied to an individual audio communication terminal device.

Additionally, the processing of a transmission audio signal and a reproduction audio signal in the audio communication terminal device 1 is mainly based on digital signal processing. However, the format of the transmission audio signal and reproduction audio signal on which digital signal processing is performed is not to be specifically limited. For example, in a case where a reproduction audio signal is output, a configuration in which an audio signal in a $\Delta\Sigma$ modulated bit stream format is reproduced by D-class amplification may be contemplated depending on the case.

Additionally, an embodiment provides an audio communication terminal device provided for audio transmission/reception in a video conferencing system, by way of example, but can generally be applied to other apparatuses capable of being regarded as a so-called loudspeaker-based telephony system, such as, for example, an audio conferencing system or a hands-free telephony function in a telephone device.

**Claims**

1. An audio signal processing apparatus **characterized by** comprising:

   signal delay means for, upon receipt of a first signal that has been subjected to a predetermined processing stage in a first processing path for executing predetermined processing involved until an audio signal transmitted from a side of another party of communication is received and is emitted as sound from a speaker, delaying the first signal by a set delay time and outputting the first signal;

   cancellation processing means for, by obtaining a signal output from the signal delay means as an input signal, executing a process for removing a signal component of the sound emitted from the speaker, which is regarded as having been picked up by a microphone, as a cancellation target, from a second signal that has been subjected to a predetermined processing stage in a second processing path for executing predetermined processing involved until sound picked up by the microphone is sent to the side of the other party of communication;

   time difference determining means for determining a time difference until the first signal is emitted from the speaker, picked up by the microphone, and appears as a signal component that forms the second signal; and

   delay time setting means for setting a delay time of the signal delay means on the basis of a time difference acquired by the time difference determining means.

**2.** The audio signal processing apparatus according to Claim 1, **characterized in that** the cancellation processing means is configured to include
an adaptive filter that operates so as to minimize the signal component of the sound serving as the cancellation target, which is included in the second signal, on the basis of the input signal and a residual signal, and
the time difference determining means is configured to
obtain, as information about the time difference, a coefficient vector that is set in the adaptive filter when the cancellation processing means captures an input signal designed to bypass the signal delay means.

**3.** The audio signal processing apparatus according to Claim 1, **characterized in that** the time difference determining means is configured to directly receive the first signal and the second signal and to obtain, as a time difference to be determined, a time difference between an input timing of the first signal and an input timing of the second signal.

**4.** A delay time setting method for an audio signal processing apparatus including a signal delay unit that receives a first signal that has been subjected to a predetermined processing stage in a first processing path for executing predetermined processing involved until an audio signal transmitted from a side of another party of communication is received and is emitted as sound from a speaker, delays the first signal by a set delay time, and outputs the first signal, and a cancellation processing unit that, by obtaining a signal output from the signal delay unit as an input signal, executes a process for removing a signal component of the sound emitted from the speaker, which is regarded as having been picked up by a microphone, as a cancellation target, from a second signal that has been subjected to a predetermined processing stage in a second processing path for executing predetermined processing involved until sound picked up by the microphone is sent to the side of the other party of communication, **characterized by** being configured to execute:

under a state where the speaker and the microphone are placed so that a physical distance of a path along which the sound emitted from the speaker is picked up by the microphone is shortened as much as possible, a time difference determining procedure for determining a time difference until the first signal is emitted from the speaker, picked up by the microphone, and appears as a signal component that forms the second signal; and a delay time setting procedure for setting a delay time of the signal delay unit on the basis of a time difference acquired in the time difference determining procedure.

**Amended claims under Art. 19.1 PCT**

**1.** (amended) An audio signal processing apparatus **characterized by** comprising:

signal delay means for, upon receipt of a first signal that has been subjected to a predetermined processing stage in a first processing path for executing predetermined processing involved until an audio signal transmitted from a side of another party of communication is received and is emitted as sound from a speaker, delaying the first signal by a set delay time and outputting the first signal;
cancellation processing means for, by obtaining a signal output from the signal delay means as an input signal, executing a process for removing a signal component of the sound emitted from the speaker, which is regarded as having been picked up by a microphone, as a cancellation target, from a second signal that has been subjected to a predetermined processing stage in a second processing path for executing predetermined processing involved until sound picked up by the microphone is sent to the side of the other party of communication;
time difference determining means for determining a time difference until the first signal is emitted from the speaker, picked up by the microphone, and appears as a signal component that forms the second signal; and delay time setting means for setting a delay time of the signal delay means on the basis of a time difference acquired by the time difference determining means,

wherein the signal delay means sets a delay time corresponding to a processing time required for signal processing of an image signal transmitted simultaneously with the audio signal transmitted from the side of the other party of communication.

**2.** The audio signal processing apparatus according to Claim 1, **characterized in that** the cancellation processing means is configured to include
an adaptive filter that operates so as to minimize the signal component of the sound serving as the cancellation target, which is included in the second signal, on the basis of the input signal and a residual signal, and
the time difference determining means is configured to

obtain, as information about the time difference, a coefficient vector that is set in the adaptive filter when the cancellation processing means captures an input signal designed to bypass the signal delay means.

**3.** The audio signal processing apparatus according to Claim 1, **characterized in that** the time difference determining means is configured to directly receive the first signal and the second signal and to obtain, as a time difference to be determined, a time difference between an input timing of the first signal and an input timing of the second signal.

**4.** A delay time setting method for an audio signal processing apparatus including a signal delay unit that receives a first signal that has been subjected to a predetermined processing stage in a first processing path for executing predetermined processing involved until an audio signal transmitted from a side of another party of communication is received and is emitted as sound from a speaker, delays the first signal by a set delay time, and outputs the first signal, and a cancellation processing unit that, by obtaining a signal output from the signal delay unit as an input signal, executes a process for removing a signal component of the sound emitted from the speaker, which is regarded as having been picked up by a microphone, as a cancellation target, from a second signal that has been subjected to a predetermined processing stage in a second processing path for executing predetermined processing involved until sound picked up by the microphone is sent to the side of the other party of communication, **characterized by** being configured to execute:

> under a state where the speaker and the microphone are placed so that a physical distance of a path along which the sound emitted from the speaker is picked up by the microphone is shortened as much as possible, a time difference determining procedure for determining a time difference until the first signal is emitted from the speaker, picked up by the microphone, and appears as a signal component that forms the second signal; and a delay time setting procedure for setting a delay time of the signal delay unit on the basis of a time difference acquired in the time difference determining procedure.

**5.** (add) The delay time setting method according to Claim 4, **characterized in that** the cancellation processing unit includes
an adaptive filter that operates so as to minimize the signal component of the sound serving as the cancellation target, which is included in the second signal, on the basis of the input signal and a residual signal, and
the time difference determining procedure is configured to
obtain, as information about the time difference, a coefficient vector that is set in the adaptive filter when the cancellation processing unit captures an input signal designed to bypass the signal delay means.

**6.** (add) The delay time setting method according to Claim 4, **characterized in that** the time difference determining procedure is configured to directly receive the first signal and the second signal and to obtain, as a time difference to be determined, a time difference between an input timing of the first signal and an input timing of the second signal.

# FIG. 1

PLACE A

2-1
(MICROPHONE)

1-1

3-1
(SPEAKER)

AUDIO
COMMUNICATION
TERMINAL
DEVICE

[COMMUNICATION LINE]

PLACE B

1-2

2-2
(MICROPHONE)

AUDIO
COMMUNICATION
TERMINAL
DEVICE

3-2
(SPEAKER)

EP 2 164 183 A1

## FIG. 2

1 (AUDIO COMMUNICATION TERMINAL DEVICE)

S (SPATIAL PROPAGATION PATH)

2

3

11 ADC

13

14 ENCODER

15

CODEC UNIT

17 COMMUNICATION UNIT

[COMMUNICATION LINE]

12 DAC

AUDIO SIGNAL PROCESSING UNIT

16 DECODER

CONTROL UNIT — 18

OPERATION UNIT — 19

EP 2 164 183 A1

# FIG. 3

1 (AUDIO COMMUNICATION TERMINAL DEVICE)

13 (AUDIO SIGNAL PROCESSING UNIT)

EP 2 164 183 A1

## FIG. 4

30 (DISPLAY MONITOR)

# FIG. 5

1 (AUDIO COMMUNICATION TERMINAL DEVICE)

13 (AUDIO SIGNAL PROCESSING UNIT)

EP 2 164 183 A1

## FIG. 6

1 (AUDIO COMMUNICATION TERMINAL DEVICE)

13 (AUDIO SIGNAL PROCESSING UNIT)

ADC 11

ENCODER 14

15

dlt1

+ − 22

20

ADF 21

DELAY TIME SETTING UNIT 26

TEST SIGNAL GENERATION CIRCUIT 24

S

[dlt1 + dlt2]

23 DELAY CIRCUIT

DAC 12

t2

t1

25 (SWITCH UNIT)

t3

CODEC UNIT

DECODER 16

dlt2

18 CONTROL UNIT

19 OPERATION UNIT

EP 2 164 183 A1

EP 2 164 183 A1

# FIG. 7

22

# FIG. 8

1 (AUDIO COMMUNICATION TERMINAL DEVICE)
13 (AUDIO SIGNAL PROCESSING UNIT)

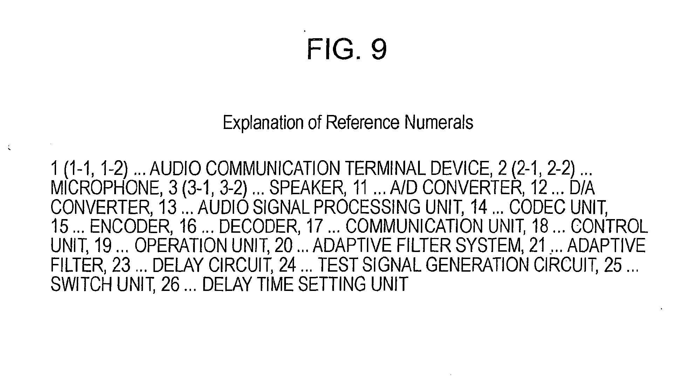

# FIG. 9

Explanation of Reference Numerals

1 (1-1, 1-2) ... AUDIO COMMUNICATION TERMINAL DEVICE, 2 (2-1, 2-2) ... MICROPHONE, 3 (3-1, 3-2) ... SPEAKER, 11 ... A/D CONVERTER, 12 ... D/A CONVERTER, 13 ... AUDIO SIGNAL PROCESSING UNIT, 14 ... CODEC UNIT, 15 ... ENCODER, 16 ... DECODER, 17 ... COMMUNICATION UNIT, 18 ... CONTROL UNIT, 19 ... OPERATION UNIT, 20 ... ADAPTIVE FILTER SYSTEM, 21 ... ADAPTIVE FILTER, 23 ... DELAY CIRCUIT, 24 ... TEST SIGNAL GENERATION CIRCUIT, 25 ... SWITCH UNIT, 26 ... DELAY TIME SETTING UNIT

# INTERNATIONAL SEARCH REPORT

| | International application No. |
|---|---|
| | PCT/JP2008/060728 |

**A. CLASSIFICATION OF SUBJECT MATTER**
*H04B3/23(2006.01)i, H04M1/60(2006.01)i, H04R3/02(2006.01)i*

According to International Patent Classification (IPC) or to both national classification and IPC

**B. FIELDS SEARCHED**

Minimum documentation searched (classification system followed by classification symbols)
H04B3/20-3/23, H04M1/60, H04R3/02

Documentation searched other than minimum documentation to the extent that such documents are included in the fields searched
Jitsuyo Shinan Koho            1922-1996    Jitsuyo Shinan Toroku Koho    1996-2008
Kokai Jitsuyo Shinan Koho      1971-2008    Toroku Jitsuyo Shinan Koho    1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 58-114554 A  (NEC Corp.),<br>07 July, 1983 (07.07.83),<br>Page 2, lower right column, line 13 to page 4,<br>upper right column, line 18; Fig. 2<br>(Family: none) | 1<br>2,3<br>4 |
| Y | JP 9-55687 A  (Kokusai Denshin Denwa Co., Ltd.),<br>25 February, 1997 (25.02.97),<br>Par. Nos. [0013] to [0014]; Fig. 4<br>(Family: none) | 2 |
| Y | JP 62-107533 A  (International Business<br>Machines Corp.),<br>18 May, 1987 (18.05.87),<br>Page 4, upper left column, line 5 to page 5,<br>upper right column, line 1; Fig. 5<br>& US 4764955 A          & EP 221221 A1 | 3 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 September, 2008 (09.09.08) | Date of mailing of the international search report<br>16 September, 2008 (16.09.08) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8274689 A